# EUROPÄISCHE PATENTSCHRIFT

(11) **EP 1 472 486 B1**
(45) Veröffentlichungstag und Bekanntmachung des Hinweises auf die Patenterteilung: **26.03.2008**
(21) Anmeldenummer: 03714726.1
(22) Anmeldetag: 04.02.2003
(51) Int. Cl.: F16L 39/00, F16L 39/04, F16L 59/06, F16L 37/00

(54) **KUPPLUNG F R KRYOGENE MEDIEN**
COUPLING FOR CRYOGENIC MEDIA
DISPOSITIF DE COUPLAGE POUR SUBSTANCES CRYOGENES

(30) Priorität: 07.02.2002 DE 10205098
(43) Veröffentlichungstag der Anmeldung: 03.11.2004
(73) Patentinhaber: Linde Aktiengesellschaft, 80807 München (DE)
(72) Erfinder: REESE, Wilfried-Henning, 85716 Unterschleissheim (DE)
(74) Vertreter: Zahn, Christoph
(86) Internationale Anmeldenummer: PCT/EP2003/001084
(87) Internationale Veröffentlichungsnummer: WO 2003/067140

(56) Entgegenhaltungen:
- DE-A- 4 104 711
- DE-C- 535 496
- US-A- 4 335 747
- US-A- 6 089 321

## Beschreibung

Die Erfindung betrifft eine Kupplung für vakuumisolierte Rohr- oder Schlauchleitungen, die zur Führung eines oder mehrerer kryogener Medien vorgesehen sind, bestehend aus einem ein- oder mehradrigen Kupplungsstecker, dem bzw. von dem mittels einer ein- oder mehradrigen Zuführleitung oder dem bzw. von dem mittels mehrerer Zuführleitungen das oder die kryogenen Medien zugeführt bzw, abgezogen werden, und einer Kupplungsdose, wobei im zusammengekuppelten Zustand ein Leitungsrohr des Kupplungssteckers, das in axialer Richtung beweglich zum Kupplungsstecker ausgebildet ist, sich über die Trennebene hinaus in die Kupplungsdose hinein erstreckt

Die Erfindung betrifft ferner die Verwendung einer derartigen Kupplung.

Im Folgenden werden bei den Bezeichnungen spezieller kryogener Medien entsprechend ihrem Aggregatzustand die Buchstaben "G" für "gasförmig" und "L" für "flüssig" bzw. "liquid" vorangestellt bzw. verwendet; also z. B. GH₂ bzw. LH₂ für gasförmigen bzw. flüssigen Wasserstoff. Des Weiteren werden die Begriffe "CNG" und "LNG" für komprimiertes bzw. verflüssigtes Erdgas verwendet.

Insbesondere Wasserstoff und Erdgas gewinnen gegenwärtig durch den steigenden Energiebedarf und das gestiegene Umweltbewußtsein als Energieträger zunehmend an Bedeutung. So werden bereits Lastkraftwagen, Busse, Personenkraftwagen und Lokomotiven mittels mit Erdgas- oder Wasserstoff-betriebenen Motoren sowie mittels Kombinationen aus Brennstoffzelle und Elektromotor angetrieben. Darüber hinaus sind erste Versuche im Gange, Flugzeuge mit den genannten Medien anzutreiben.

Die Speicherung des Wasserstoffs oder Erdgases "an Bord" der oben genannten Verkehrsmittel ist dabei in flüssiger Form am sinnvollsten. Zwar müssen der Wasserstoff und LNG dazu auf etwa 25 K bzw. 112 K abgekühlt und auf dieser Temperatur gehalten werden - was nur durch entsprechende Isoliermaßnahmen an den Speicherbehältern bzw. -tanks realisiert werden kann -, doch ist eine Speicherung in gasförmigem Zustand aufgrund der geringen Dichte von GH₂ und CNG in der Regel in den obengenannten Verkehrsmitteln ungünstiger, da die Speicherung hierbei in großvolumigen und schweren Speicherbehältern bei hohen Drücken erfolgen muss.

Aus der DE-A 41 04 711 ist eine gattungsgemäße Kupplung bekannt Das Prinzip einer derartigen Kupplung basiert auf einem System, bei welchem zwei Kugelhähne - einer auf der Kupplungssteckerseite und einer auf der Kupplungsdosenseite - miteinander verflanscht werden. Anschließend fährt von der Steckerseite her durch die Durchgangsbohrungen der Kugelhähne ein vakuumisoliertes Füllrohr hindurch, durch welches das (kryogene) Medium zur Kupplungsdosenseite strömt. Nach dem Füllvorgang fährt der Stecker zurück, und die Kugelhähne werden wieder geschlossen. Anschließend wird die Verflanschung der Kugelhähne getrennt. Eine derartige Betankungskupplung ermöglicht ein Überfüllen von (kryogenen) Flüssigkeiten, ohne dass äußerlich eine Abkühlung der sichtbaren Komponenten zu erkennen ist.

Bei der Anwendung des vorbeschriebenen Prinzips ist es somit notwendig, das vakuumisolierte Füllrohr, das in axialer Richtung beweglich zum Kupplungsstecker ausgebildet sein muss, durch die Kupplungsebene hindurch aus dem Kupplungsstecker in die Kupplungsdose hinein vor- und nach Beendigung des Betankungsvorganges wieder zurückzuschieben. Nachteilig bei gattungsgemäßen Kupplungskonstruktionen ist die relativ große Baulänge des kupplungssteckerseitigen Bauteiles. Die Ursache hierfür liegt in der Abdichtung des Kupplungssteckers zur Atmosphäre mittels bspw. eines Membranbalges oder anderer abdichtender Maßnahmen.

Das beschriebene Verschieben des vakuumisolierten Füllrohres aus dem Kupplungsstecker in die Kupplungsdose hinein erfolgt bisher mittels eines an dem Kupplungsstecker angeordneten pneumatischen Kolbens, der über eine Leitung mit dem zu verfahrenden Füllrohr in Wirkverbindung steht Die erforderliche Abdichtung bzw. Isolierung dieser Leitung stellt in der Praxis das größte Problem dar.

Aufgabe der vorliegenden Erfindung ist es, eine gattungsgemäße Kupplung für vakuumisolierte Rohr- oder Schlauchleitungen anzugeben, die die.vorgenannten Nachteile vermeidet, insbesondere eine kürzere Baulänge des Kupplungssteckers ermöglicht.

Zur Lösung dieser Aufgabe wird eine gattungsgemäße Kupplung für vakuumisolierte Rohr- oder Schlauchleitungen vorgeschlagen, die dadurch gekennzeichnet, dass das Leitungsrohr durch wenigstens einen innerhalb des Kupplungssteckers angeordneten Antrieb in axialer Richtung verfahrbar ist.

Im Gegensatz zu den bekannten Kupplungskonstruktionen kann die Vorschubeinrichtung des Steckers bzw. Leitungsrohres nunmehr ohne Verwendung eines Membranbalges oder eines anderen zur Atmosphäre abdichtenden Mittels realisiert werden. Dadurch kann die Baulänge des Kupplungssteckers wesentlich verkürzt werden, was einen für den Bediener handlicheren Kupplungsstecker zur Folge hat.

Hierbei ist der innerhalb des Kupplungssteckers angeordnete Antrieb vorzugsweise als wenigstens ein mit dem Leitungsrohr in Wirkverbindung stehender Druckkolben ausgebildet.

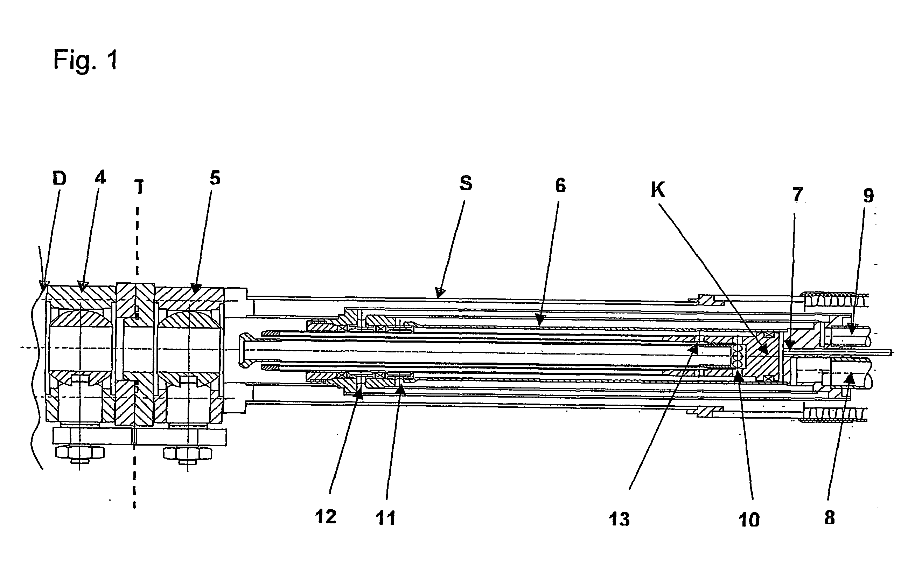

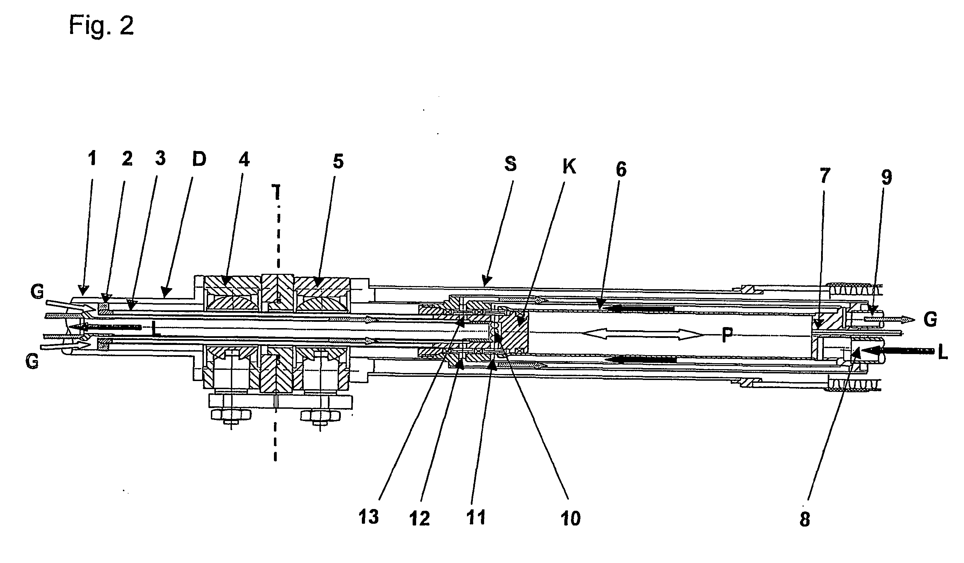

Die erfindungsgemäße Kupplung sowie weitere Ausgestaltungen derselben, die Gegenstände der abhängigen Patentansprüche sind, seien im Folgenden anhand des in den Figuren 1 und 2 dargestellten Ausführungsbeispieles näher erläutert.

Hierbei zeigen:
- Figur 1:: Seitliche Schnittdarstellung der Kupplung in zusammengekuppelten Zustand, wobei das Leitungsrohr des Kupplungssteckers hinter das steckerseitige Absperrorgan zurückgezogen ist
- Figur 2:: Seitliche Schnittdarstellung der Kupplung in zusammengekuppelten Zustand, wobei das Leitungsrohr bis zum Anschlag in die Kupplungsdose eingeführt ist

Die Figuren 1 und 2 zeigen eine zweiadrige Ausführungsform der erfindungsgemäßen Kupplung, bestehend aus dem Kupplungsstecker S sowie der Kupplungsdose D, die an der Trennebene T miteinander verbunden sind.

Die Kupplungsdose D weist eine Außenwandung 1 auf, in die das Leitungsrohr 3 des Kupplungssteckers S während des Betankungsvorganges bis zu einem Anschlag 2 eingeschoben wird. Ferner weisen Kupplungsstecker S und Kupplungsdose D je einen Kugelhahn 5 bzw. 4 auf, wobei deren Durchgangsbohrungen zur Aufnahme des Leitungsrohres 3 des Kupplungssteckers S vorgesehen sind. Das axial verschiebbare Leitungsrohr 3 ist innerhalb des Kupplungssteckers S in einem Führungsrohr 6 angeordnet.

Erfindungsgemäß ist nunmehr innerhalb des Kupplungssteckers S ein Raum P, der mit einem Gasdruck beaufschlagt werden kann, vorgesehen. Dazu ist der Raum P über Leitung 7 mit einer externen, in den Figuren 1 und 2 nicht dargestellten Gasquelle verbunden. Aus dieser wird er bspw. mit Helium oder einem Helium/Wasserstoff-Gasgemisch beaufschlagt. Prinzipiell können eine Vielzahl unterschiedlicher Gase zur Anwendung kommen, jedoch sollten diese - entsprechend einer vorteilhaften Ausgestaltung der Erfindung - beim Umfüllen der kryogenen Flüssigkeit selbst nicht verflüssigbar sein.

Wird der Raum P mit einem Gasdruck beaufschlagt, so werden der Kolben K und damit das Leitungsrohr 3 - bei geöffneten Kugelhähnen 4 und 5 - bis zu dem beschriebenen Anschlag 2 aus dem Kupplungsstecker S nach vorne in die Kupplungsdose D geschoben. Nach Entspannung des Raumes P werden der Kolben K und das Leitungsrohr 3 vom Gasdruck der Fülleitung wieder zurückgefahren.

Zum Überfüllen des kryogenen Mediums in den fahrzeugseitigen Speicherbehälter wird das Leitungsrohr 3 durch die geöffneten Kugelhähne 4 und 5 bzw. deren Durchgangsbohrungen bis zum dem Anschlag 2 der Kupplungsdose D geführt. In dieser Position kommen die Öffnungen 11 der Zuführleitung 8 mit den Öffnungen 10 des Leitungsrohres 3 zur Deckung, so dass dem kryogenen Medium L, das vorzugsweise in flüssiger Form überfüllt wird, ein geringer Strömungswiderstand geboten wird. Gleichzeitig kommen die Öffnungen 12 der Rückgasleitung 9 mit den Öffnungen 13 des Leitungsrohres zur Deckung, so dass das koaxial geführte Rückgas G abgeführt und vorzugsweise zur Füllanlage zurückgeführt werden kann.

Hierbei sind die Öffnungen 10 und 13 des Leitungsrohre 3 mit den entsprechenden Öffnungen 11 und 12 der Zuführ- sowie Rückgasleitung 8 bzw. 9 vorzugsweise erst bei einem vollständigen Einschieben des Leitungsrohres 3 in die Kupplungsdose D zur Deckung bringbar. Dadurch wird sichergestellt, dass ein Überströmen des Mediums aus dem Kupplungsstecker S in die Kupplungsdose D erst dann erfolgt, wenn das Leitungsrohr 3 vollständig - also bis zu dem dafür vorgesehenen Anschlag 2 - in die Kupplungsdose D eingeschoben ist.

Das Verschieben des Leitungsrohrs 3 kann mittels pneumatisch und/oder mechanisch wirkender Vorrichtungen erfolgen. Im Regelfall wird das Einschieben des Leitungsrohres 3 in die Kupplungsdose D mit dem Verklammern von Kupplungsstecker S und Kupplungsdose D sowie dem Öffnen der Kugelhähne 4 und 5 gekoppelt sein, wodurch die Bedienbarkeit der erfindungsgemäßen Kupplung vereinfacht wird.

Die erfindungsgemäße Kupplung für vakuumisolierte Rohr- oder Schlauchleitungen eignet sich insbesondere als Betankungskupplung für Fahrzeuge jeder Art, insbesondere für Kraftfahrzeuge, die mit flüssigem Wasserstoff und/oder verflüssigtem Erdgas betrieben werden und bei denen der fahrzeugseitige Speicherbehälter mit flüssigem Wasserstoff oder LNG betankt wird.

## Patentansprüche

1. Kupplung für vakuumisolierte Rohr- oder Schlauchleitungen, die zur Führung eines oder mehrerer kryogener Medien vorgesehen sind, bestehend aus einem ein- oder mehradrigen Kupplungsstecker (S), dem bzw. von dem mittels einer ein- oder mehradrigen Zuführleitung (8) oder dem bzw. von dem mittels mehrerer oder Zuführleitungen das oder die kryogenen Medien zugeführt bzw. abgezogen werden, und einer Kupplungsdose (D), wobei im zusammengekuppeiten Zustand ein Leitungsrohr (3) des Kupplungssteckers (S), das in axialer Richtung beweglich zum Kupplungsstecker (S) ausgebildet ist, sich über die Trennebene (T) hinaus in die Kupplungsdose (D) hinein erstreckt, **dadurch gekennzeichnet, dass** das Leitungsrohr (3) durch wenigstens einen innerhalb des Kupplungssteckers (S) angeordneten Antrieb in axialer Richtung verfahrbar ist.

2. Kupplung nach Anspruch 1, **dadurch gekennzeichnet, dass** der innerhalb des Kupplungssteckers (S) angeordnete Antrieb als wenigstens ein mit dem Leitungsrohr (3) in Wirkverbindung stehender Druckkolben (K) ausgebildet ist.

3. Kupplung nach Anspruch 2, **dadurch gekennzeichnet, dass** der Druckkolben (K) durch eine externe Gasquelle versorgbar ausgebildet ist.

4. Kupplung nach Anspruch 2 oder 3, **dadurch gekennzeichnet, dass** der Druckkolben mit einem Druckgas, welches beim Umfüllen der kryogenen Flüssigkeit selbst nicht verflüssigt wird, beaufschlagbar ist.

5. Kupplung nach Anspruch 3 oder 4, **dadurch gekennzeichnet, dass** die externe, den oder die Druckkolben (K) versorgende Gasquelle eine Helium- oder Helium/Wasserstoff-Gasquelle ist.

6. Kupplung nach einem der vorhergehenden Ansprüche 1 bis 5, **dadurch gekennzeichnet, dass** das oder die Leitungsrohre (3) des Kupplungssteckers (S) jeweils wenigstens eine Öffnung (10, 13) aufweisen, die mit einer oder den entsprechenden Öffnungen (11, 12) der Zuführ- bzw. Rückgasleitungen (8, 9) zur Deckung bringbar sind.

7. Kupplung nach Anspruch 6, **dadurch gekennzeichnet, dass** die Öffnung(en) (10, 13) des oder der Leitungsrohre (3) mit der oder den entsprechenden Öffnungen (11, 12) der Zuführ- und/oder Rückgasleitungen (8, 9) erst bei einem vollständigen Einschieben des Leitungsrohres (3) in die Kupplungsdose (D) zur Deckung bringbar sind.

8. Verwendung einer Kupplung für vakuumisolierte Rohr- oder Schlauchleitungen nach einem der vorhergehenden Ansprüche als Betankungskupplung für Fahrzeuge jeder Art, insbesondere für Kraftfahrzeuge, die mit flüssigem Wasserstoff und/oder verflüssigtem Erdgas betrieben werden.

## Claims

1. Coupling for vacuum-insulated pipe or hose lines, which are provided for carrying one or more cryogenic media, comprising a single- or multi-core coupling connector (S), to which the cryogenic medium or media is/are supplied by means of a single or multi-core supply line or supply lines (8) or from which the cryogenic medium or media is/are removed by means of a single or multi-core supply line or supply lines (8), and a coupling socket (D), wherein, in the coupled-together state, a conduit (3) of the coupling connector (S), which is formed in such a way that it is moveable in an axial direction in relation to the coupling connector (S), extends beyond the plane of separation (T) into the coupling socket (D), **characterized in that** the conduit (3) can be made to move in the axial direction by at least one drive arranged within the coupling connector (S).

2. Coupling according to Claim 1, **characterized in that** the drive arranged within the coupling connector (S) is formed as at least one pressure piston (K) in operative connection with the conduit (3).

3. Coupling according to Claim 2, **characterized in that** the pressure piston (K) is formed such that it can be supplied by way of an external gas source.

4. Coupling according to Claim 2 or 3, **characterized in that** the pressure piston can be subjected to a compressed gas which is not liquefied during the refilling of the cryogenic fluid itself.

5. Coupling according to Claim 3 and 4, **characterized in that** the external gas source supplying the pressure piston or pistons (K) is a helium or helium/hydrogen gas source.

6. Coupling according to one of the preceding Claims 1 to 5, **characterized in that** the conduit or conduits (3) of the coupling connector (S) respectively has/have at least one opening (10, 13), which can be made to coincide with a or the corresponding openings (11, 12) of the supply or return gas lines (8, 9).

7. Coupling according to Claim 6, **characterized in that** the opening(s) (10, 13) of the conduit or conduits (3) can be made to coincide with the corresponding opening or openings (11, 12) of the supply and/or return gas lines (8, 9) only when the conduit (3) has been pushed completely into the coupling socket (D).

8. Use of a coupling for vacuum-insulated pipe or hose lines according to one of the preceding claims as a refuelling coupling for vehicles of any type, in particular for motor vehicles that are operated on liquid hydrogen and/or liquefied natural gas.

## Revendications

1. Dispositif de couplage pour conduites tubulaires rigides ou souples isolées sous vide, qui sont prévues pour guider un ou plusieurs milieux cryogènes, constitué d'une fiche de couplage (S) à un ou plusieurs brins à laquelle ou de laquelle sont acheminés ou soutirés au moyen d'une conduite d'alimentation à un ou plusieurs brins (8) ou au moyen de plusieurs conduites d'alimentation, le ou les milieux cryogènes, et d'une prise de couplage (D), un tube de conduite (3) de la fiche de couplage (S), qui est réalisé de manière mobile dans la direction axiale vers la fiche de couplage (S), s'étendant dans l'état accouplé au-delà du plan de séparation (T) dans la prise de couplage (D), **caractérisé en ce que** le tube de conduite (3) peut être déplacé dans la direction axiale par au moins un entraînement disposé à l'intérieur de la fiche de couplage (S).

2. Dispositif de couplage selon la revendication 1, **caractérisé en ce que** l'entraînement disposé à l'intérieur de la fiche de couplage (S) est réalisé sous forme d'au moins un piston de pression (K) coopérant fonctionnellement avec le tube de conduite (3).

3. Dispositif de couplage selon la revendication 2, **caractérisé en ce que** le piston de pression (K) est réalisé de manière à pouvoir être alimenté par une source de gaz extérieure.

4. Dispositif de couplage selon la revendication 2 ou 3, **caractérisé en ce que** le piston de pression peut être sollicité par un gaz sous pression qui n'est pas lui-même liquéfié lors du remplissage avec le liquide cryogène.

5. Dispositif de couplage selon la revendication 3 ou 4, **caractérisé en ce que** la source de gaz extérieure alimentant le ou les pistons de pression (K) est une source de gaz constituée d'hélium ou d'un mélange d'hélium et d'hydrogène.

6. Dispositif de couplage selon l'une quelconque des revendications précédentes 1 à 5, **caractérisé en ce que** le ou les tubes de conduite (3) de la fiche de couplage (S) présentent chacun au moins une ouverture (10, 13) qui peut être amenée en coïncidence avec une ou les ouvertures correspondantes (11, 12) des conduites de gaz d'alimentation ou de retour (8, 9).

7. Dispositif de couplage selon la revendication 6, **caractérisé en ce que** la ou les ouvertures (10, 13) du ou des tubes de conduite (3) peuvent être amenées en coïncidence avec la ou les ouvertures correspondantes (11, 12) des conduites de gaz d'alimentation ou de retour (8, 9) seulement en cas d'insertion complète du tube de conduite (3) dans la prise de couplage (D).

8. Utilisation d'un dispositif de couplage pour des conduites tubulaires rigides ou souples isolées sous vide, selon l'une quelconque des revendications précédentes, servant de dispositif de couplage pour le remplissage de véhicules de tous types, notamment pour des véhicules automobiles qui fonctionnent à l'hydrogène liquide et/ou au gaz naturel liquéfié.
